Europäisches Patentamt

European Patent Office

Office européen des brevets

(11) Veröffentlichungsnummer: **0 027 936**
**B1**

(12) # EUROPÄISCHE PATENTSCHRIFT

(45) Veröffentlichungstag der Patentschrift:
**19.10.83**

(51) Int. Cl.³: **C 08 F 2/06**

(21) Anmeldenummer: **80106166.4**

(22) Anmeldetag: **10.10.80**

(54) **Verfahren zur Herstellung von pulverförmigen Polymerisaten.**

(30) Priorität: **17.10.79 DE 2941978**

(43) Veröffentlichungstag der Anmeldung:
**06.05.81 Patentblatt 81/18**

(45) Bekanntmachung des Hinweises auf die Patenterteilung:
**19.10.83 Patentblatt 83/42**

(84) Benannte Vertragsstaaten:
**AT BE CH DE FR GB IT LI NL SE**

(56) Entgegenhaltungen:
**FR-A-2 361 427**

**Die Akte enthält technische Angaben, die nach dem
Eingang der Anmeldung eingereicht wurden und die
nicht in dieser Patentschrift enthalten sind.**

(73) Patentinhaber: **BASF Aktiengesellschaft,
Carl-Bosch-Strasse 38, D-6700 Ludwigshafen (DE)**

(72) Erfinder: **Messmer, Karlheinz, Dr., Budapester
Strasse 24, D-6700 Ludwigshafen (DE)**
Erfinder: **Stedefeder, Joachim, Dr.,
Albrecht-Duerer-Strasse 20, D-6840 Lampertheim (DE)**
Erfinder: **Fischer, Hermann, Dr., Hardenburgstrasse 33,
D-6703 Limburgerhof (DE)**
Erfinder: **Hartmann, Heinrich, Dr., Weinheimer
Strasse 46, D-6703 Limburgerhof (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Verfahren zur Herstellung von pulverförmigen Polymerisaten

Die Erfindung betrifft ein Verfahren zur Herstellung von pulverförmigen Polymerisaten aus polymerisierbaren monoäthylenisch ungesättigten Verbindungen durch Polymerisieren der Monomeren in einem Pulverbett in Gegenwart üblicher Polymerisationsinitiatoren unter Aufrechterhaltung des Pulverzustandes und Umwälzung der Reaktionsmasse.

Aus der FR-PS 1 117 753 ist bekannt, hydrophobe Polymerisate, wie Polyvinylchlorid, dadurch herzustellen, daß man äthylenisch ungesättigte Monomere in Gegenwart eines Verdünnungsmittels und eines Polymerisationsinitiators in einem Polymerisatpulver unter Mischen der Reaktionsmasse und Aufrechterhalten des Pulverzustandes während der Umsetzung polymerisiert. Die Polymerisation kann auch in Abwesenheit eines Verdünnungsmittels vorgenommen werden, indem man einen Überschuß des Monomeren anwendet und die Polymerisationswärme durch Verdampfen des flüssigen Monomeren aus der Polymerisationszone entfernt. Im Falle der Anwendung eines Verdünnungsmittels wird Wasser eingesetzt, das dazu dient, die bei der Polymerisation entstehende Wärme aus dem System abzuführen. Das Wasser wird kondensiert und wieder der Reaktionsmischung zugeführt. Nach diesem Verfahren ist es nicht möglich, pulverförmige hydrophile Polymerisate herzustellen, weil das sich in der Polymerisationszone anreichernde Wasser die hydrophilen Polymerisate löst bzw. quillt, so daß die Polymerisatteilchen miteinander verklumpen.

Aus der US-PS 4 135 043 ist ein Verfahren zur Herstellung von pulverförmigen hydrophilen Polymerisaten bekannt, bei dem als Hilfsflüssigkeit ausschließlich Wasser verwendet wird. Die Verwendung von Wasser als Verdünnungsmittel ist jedoch nicht frei von Nachteilen, weil die Polymerisation der Monomeren teilweise schon in den Zuführungsvorrichtungen der Monomeren in die Polymerisationszone beginnt und die Polymerisation bei Temperaturen von weit über 100°C durchgeführt werden muß, um das Wasser bei Normaldruck aus der Polymerisationszone zu entfernen.

Aufgabe der Erfindung ist es, ein Verfahren zur Herstellung von pulverförmigen Polymerisaten zur Verfügung zu stellen, nach dem man sowohl wasserlösliche als auch wasserunlösliche Monomere polymerisieren kann und bei dem pulverförmige Polymerisate erhalten werden, die einen geringen Restmonomergehalt haben.

Die Aufgabe wird bei dem eingangs beschriebenen Verfahren dadurch gelöst, daß man die Monomeren gelöst oder emulgiert in einem inerten organischen Lösungsmittel, das ein Fällungsmittel für die Polymerisate ist, in 5- bis 50%iger Lösung oder Emulsion unter Polymerisationsbedingungen mit dem Pulverbett in Kontakt bringt und die organischen Lösungsmittel dampfförmig aus der Polymerisationszone entfernt.

Die Polymerisation wird vorzugsweise in Abwesenheit von Wasser durchgeführt. Die Lösungsmittel können jedoch ggf. bis zu 10 Gew.-% Wasser enthalten. Um Polymerisate mit einem besonders niedrigen Restmonomergehalt herzustellen, führt man eine Nachpolymerisation durch, indem man entweder im Anschluß an die Hauptpolymerisation der Reaktionsmasse einen Polymerisationsinitiator zusetzt, der bei höherer Temperatur zerfällt als der für die Hauptpolymerisation verwendete oder bereits bei der Hauptpolymerisation die Initiatormischung einsetzt und anschließend die Nachpolymerisation bei einer um 10 bis 100°C höheren Temperatur durchführt als die Hauptpolymerisation. Man erhält auf diese Weise direkt pulverförmige Polymerisate verschiedener Korngrößenverteilungen. Die Korngrößenverteilung hängt in komplexer Weise von den Reaktionsbedingungen, der Zusammensetzung des Initiatorsystems sowie von der Intensität der Umwälzung der Reaktionsmasse in der Polymerisationszone ab.

Nach dem erfindungsgemäßen Verfahren werden vorzugsweise polymerisierbare wasserlösliche, äthylenisch ungesättigte Verbindungen der Homo- oder Copolymerisation unterworfen. Diese Monomeren bilden hydrophile Polymerisate. Geeignete wasserlösliche Monomere sind beispielsweise äthylenisch ungesättigte $C_3$- bis $C_5$-Monocarbonsäuren, Dicarbonsäuren und deren Anhydride, z. B. Acrylsäure, Methacrylsäure, Maleinsäure, Maleinsäureanhydrid, Fumarsäure und Itaconsäure, Amide äthylenisch ungesättigter Carbonsäure, wie vorzugsweise Acrylamid und Methacrylamid sowie basische Acrylamide und Methacrylamide, z. B. Dialkylaminoalkylacrylamide oder Dialkylaminoalkylmethacrylamide, z. B. Dimethylaminoäthylaceylamid, Dimethylaminoäthylacrylamid und Diäthylaminoäthylacrylamid, Ester von äthylenisch ungesättigten Carbonsäuren mit Aminoalkoholen, z. B. Aminoäthylacrylat, Dimethylaminoäthylacrylat, Diäthylaminopropylacrylat und Dimethylaminoäthylmethacrylat, Vinylpyrrolidon und dessen Derivate, Vinylimidazol und substituierte Vinylimidazole und Vinylsulfone. Die äthylenisch ungesättigten Carbonsäuren können, sofern sie in dem organischen Lösungsmittel löslich sind, auch in neutralisierter oder teilneutralisierter Form eingesetzt werden. Die genannten Monomeren können allein oder in Mischung der Polymerisation unterworfen werden, z. B. kann man Copolymerisate aus Acrylamid und Acrylsäure oder Copolymerisate aus Methacrylamid, Dimethylaminoäthylacrylat und Acrylsäure oder aus Acrylsäure und Acrylnitril herstellen. Die Monomeren können jedoch auch allein zu Homopolymerisaten polymerisiert werden.

Um das Molekulargewicht der Polymerisate zu erhöhen, kann man die Polymerisation in Gegenwart von Vernetzungsmitteln durchfüh-

ren. Hierbei handelt es sich um Verbindungen, die mit den Monomeren copolymerisierbar sind und zwei oder mehr äthylenisch ungesättigte Verbindungen aufweisen. Geeignete Vernetzungsmittel sind beispielsweise Butandioldiacrylat, Methylen-bis-acrylamid, Divinyldioxan, Äthylendivinylharnstoff und Pentaerythrittriallyläther. Die vernetzend wirkenden Comonomeren mit zwei oder mehr Doppelbindungen werden bis höchstens 5 Gew.-%, vorzugsweise 0,5 bis 2 Gew.-%, bezogen auf die Gesamtmonomeren, bei der Polymerisation eingesetzt. Falls nur eine partielle Vernetzung der Polymerisate erforderlich ist, werden die Comonomeren mit zwei oder mehr Doppelbindungen in einer Menge von 0,001 bis 0,1 Gew.-%, bezogen auf die gesamten Monomeren, bei der Polymerisation verwendet.

Geeignete wasserunlösliche polymerisierbare äthylenisch ungesättigte Verbindungen sind beispielsweise Styrol, Acrylnitril, Methacrylnitril, Acrylsäure- und Methacrylsäureester von $C_1$- bis $C_8$-Alkoholen, Vinylester von $C_2$- bis $C_{12}$-Carbonsäuren, Mono- und Diester der Maleinsäure und Vinyläther, wie Vinylmethyläther, Vinylbutyläther, Vinylcyclohexyläther. Um die Monomeren zu polymerisieren, werden sie zunächst in einem inerten organischen Lösungsmittel gelöst bzw. emulgiert.

Geeignete Lösungsmittel sind beispielsweise Ketone, wie Aceton oder Methyläthylketon, Kohlenwasserstoffe, z. B. gesättigte aliphatische Kohlenwasserstoffe, wie Pentan, Hexan, Heptan, Octan, Isooctan und cyclische aliphatische Kohlenwasserstoffe, wie Cyclohexan und Decalin, sowie aromatische Kohlenwasserstoffe, wie Benzol, Toluol und Xylol und halogenierte aliphatische Kohlenwasserstoffe, wie 1,1,2-Trichlor-1,2,2-trifluoräthan und Trichlorfluormethan, Äther, wie Dimethyläther, Diäthyläther, Methyl-t-butyläther, Tetrahydrofuran und Dioxan und Ester wie Methylacetat und Äthylacetat, Alkohole wie einwertige $C_1$- bis $C_8$-Alkohole, Lactone wie $\gamma$-Butyrolacton, Dimethylsulfoxid, Dimethylformamid und Nitromethan.

Vorzugsweise verwendet man als Lösungsmittel Aceton, n-Hexan, Cyclohexan und Methyl-t-butyläther. Prinzipiell eignen sich alle organischen Lösungsmittel, die unter den Polymerisationsbedingungen inert sind und die praktisch nicht mit den bei der Polymerisation anwesenden Reaktionspartnern reagieren. Die inerten Lösungsmittel haben jedoch einen Einfluß auf die Korngrößenverteilung und auch auf das Molekulargewicht der Polymerisate, weil sie mehr oder weniger stark als Regler wirken können. Der Siedepunkt der inerten organischen Lösungsmittel kann (bei Normalbedingungen) zwischen −25 und 190° C liegen. Vorzugsweise verwendet man inerte organische Lösungsmittel, deren Siedepunkt im Temperaturbereich von 20 bis 150° C liegt. Das Lösungsmittel muß so ausgewählt werden, daß es das Polymerisat nicht löst. Sofern die Monomeren in dem inerten Lösungsmittel nicht vollständig gelöst werden können, werden sie darin emulgiert. Dazu ist es in manchen Fällen erforderlich, einen Emulgator zu verwenden. Geeignete Emulgatoren hierfür sind beispielsweise Fettsäuresorbinester, Äthylenoxid-Propylenoxid-copolymere, oxäthylierte Fettsäuren, Phenole, $C_{10}$- bis $C_{18}$-Alkohole oder $C_{10}$- bis $C_{18}$-Amine.

Die Emulgatoren werden in einer Menge von 0,01 bis 1 Gew.-%, bezogen auf die Monomeren, eingesetzt.

Die Polymerisation wird erfindungsgemäß in einem Pulverbett vorgenommen. Als Pulver eignen sich sowohl anorganische als auch organische pulverförmige Materialien. Geeignete pulverförmige Materialien sind beispielsweise Quarzmehl, Talkum, Aluminiumoxid, Ruß, Holzmehl, Kochsalz oder Glasperlen. Als anorganische pulverförmige Materialien eignen sich nicht nur inerte Stoffe sondern auch z. B. Soda, Pottasche, Ammoniumcarbonat, Ammoniumcarbaminat, Natriumhydrogencarbonat, Erdalkalimetalloxide, wie Magnesiumoxid und Calciumoxid, Magnesiumcarbonat und Calciumcarbonat. Bei Einsatz der zuletzt genannten pulverförmigen Stoffe erhält man bei der Polymerisation von Säuregruppen enthaltenden Monomeren teiloder vollständig neutralisierte Polymerisate. Vorzugsweise legt man in der Polymerisationszone jedoch ein inertes pulverförmiges Polymerisat vor, das der Zusammensetzung des sich aus dem Monomerengemisch bzw. dem zu polymerisierenden Monomeren neu bildenden Polymerisates entspricht. Diese Polymerisate werden — falls kein pulverförmiges Polymerisat zur Verfügung stehen sollte — nach bekannten Polymerisationsverfahren hergestellt, z. B. durch Polymerisieren der Monomeren in Substanz und Zerkleinern des festen Polymerisates, durch Polymerisieren in einer Wasser-in-Öl-Emulsion der Monomeren und Ausfällen und Isolieren des gebildeten Polymerisates oder durch Fällungsoder Perlpolymerisation.

Als Polymerisationsreaktoren kommen beispielsweise Kessel, Rührautoklaven, ggf. als mehrstufige Kaskade oder auch Kombinationen von Rührkesseln mit nachgeschaltetem Strömungsrohr in Betracht.

Der Pulverzustand in der Polymerisationszone wird während der gesamten Polymerisationsdauer aufrechterhalten. Die Monomeren-Lösung bzw. -emulsion wird vorzugsweise in feiner Verteilung auf das Pulver in der Polymerisationszone aufgebracht. Dieser Verfahrensschritt geschieht in der Regel durch Versprühen der Lösung bzw. Emulsion. Die Monomerenlösung kann auf das Pulverbett aufgesprüht oder auch direkt im Pulverbett versprüht werden. Die Monomeren werden in dem Maße in die Polymerisationszone eingebracht, in dem sie auch polymerisieren. Dies kann entweder kontinuierlich oder absatzweise erfolgen. Während der Polymerisation ist für eine ausreichende Umwälzung der Reaktionsmasse Sorge zu tragen. Die Mischung wird vorzugsweise gerührt. Die bei der Polymerisation entstehende Wärme sowie die durch die Umwälzung des Pulvers entstehende, werden durch kontinuierliches Verdampfen des Lösungsmittels aus der Reaktionszone entfernt. Vorzugsweise wird die Konzentration der Monomeren in dem organischen Lösungsmittel so gewählt, daß bei vollständiger Polymerisation der Monomeren die freigesetzte Polymerisationsenthalpie gerade ausreicht, um die organischen Lösungsmittel unter den herrschenden Reaktionsbedingungen durch Verdampfen vollständig aus der Polymerisationszone zu entfernen. Die Konzentration der Monomeren in dem Lösungsmittel liegt daher vorzugsweise in dem Bereich von 15 bis 35 Gew.-%.

Die Polymerisation wird mit Hilfe der üblichen radikalischen Katalysatoren initiiert. Geeignet sind beispielsweise Peroxide, Hydroperoxide, Azoverbindungen und C—C-labile Verbindungen. Die Polymerisationsinitiatoren können auch zusammen mit einem geeigneten Beschleuniger eingesetzt werden. Als Beschleuniger eignen sich reduzierende Verbindungen, vorzugsweise Amine mit cyclischem oder phenylischem Grundkörper allein oder in Gegenwart organischer Übergangsmetallverbindungen. Die Polymerisationsinitiatoren können entweder zusammen mit der Monomerenlösung bzw. -emulsion oder auch getrennt davon in die Polymerisationszone eingeführt werden. Sofern die bei der Polymerisation freiwerdende Wärme, einschließlich der aufgrund des Rührens oder einer ggf. erfolgenden Neutralisation entstehenden Wärme, nicht ausreicht, um das Lösungsmittel aus dem System zu entfernen, ist es erforderlich, dem Reaktionsgemisch zusätzlich Wärme zuzuführen, damit das Lösungsmittel während der Polymerisation aus der Polymerisationszone vollständig entfernt wird und der Pulverzustand aufrechterhalten bleibt. Sollte dagegen die Lösungsmittelmenge zu gering sein, um die gesamte bei der Polymerisation entstehende Wärme abzuführen, ist es erforderlich, die Reaktionsmasse zu kühlen.

Die Polymerisation der Monomeren kann, je nach Reaktivität der Monomeren und Wirksamkeit des Initiatorsystems, in dem Temperaturbereich von −25 bis 160°C, vorzugsweise 20 bis 100°C durchgeführt werden. Da der Pulverzustand während der Polymerisation aufrechterhalten wird, liegt die Polymerisationstemperatur ca. 10°C unterhalb des Schmelzpunkts bzw. des beginnenden Erweichungsbereiches der Polymerisate, so daß sie nicht miteinander verkleben. Die Polymerisation kann bei Normaldruck, im Vakuum oder auch unter erhöhtem Druck bis 25 bar, vorzugsweise bis zu 4 bar, durchgeführt werden. Das erfindungsgemäße Verfahren kann diskontinuierlich oder kontinuierlich ablaufen, wobei als Behälter für die Reaktionszone in beiden Fällen, beispielsweise Rührkessel oder dynamische Mischer aller Art in Betracht kommen. Bei kontinuierlichem Betrieb wird die Monomerlösung bzw. -emulsion nach Vermischen mit dem Initiatorsystem kontinuierlich oder in Intervallen der Reaktionszone zugeführt und das Polymerisat kontinuierlich oder absatzweise über eine geeignete Austragsvorrichtung, z. B. Schnecke, daraus entfernt. Pro Zeiteinheit wird dabei etwa die gleiche Menge an Polymerisat entfernt, wie an Monomeren in die Reaktionszone eingebracht wird. Vorteilhafterweise wird die Monomerenlösung sowie das Initiatorsystem gekühlt in die Reaktionszone eingebracht, d. h. die Temperatur der Monomerenlösung liegt in dem Bereich von −40 bis 20°C.

Um Polymerisatpulver mit einem besonders niedrigen Monomerengehalt herzustellen, wird im Anschluß an die Hauptpolymerisation eine Nachpolymerisation durchgeführt. Zu diesem Zweck wird die Reaktionsmasse auf eine Temperatur erhitzt, die 10 bis 100°C über derjenigen Temperatur liegt, bei der die Hauptpolymerisation durchgeführt wurde. Um die restlichen Monomeren zu polymerisieren, wird vorzugsweise ein bei höherer Temperatur zerfallender Polymerisationsinitiator bereits den Monomeren zugegeben, es kann aber auch eine Lösung des Initiators in einem organischen Lösungsmittel nach Abschluß der Hauptpolymerisation auf die Reaktionsmasse gesprüht werden. Als Polymerisationsinitiator kann man im zuletzt genannten Fall den gleichen Initiator wie bei der Hauptpolymerisation verwenden. Vorzugsweise setzt man jedoch für die Nachpolymerisation Initiatoren ein, die bei höherer Temperatur zerfallen als diejenigen, die für die Hauptpolymerisation verwendet werden. Für die Nachpolymerisation verwendet man 0,05 bis 0,8, vorzugsweise 0,15 bis 0,5 Mol-% eines Polymerisationsinitiators pro Mol eines Monomeren oder eines Monomerengemisches. Die Polymerisationsinitiatoren, die für die Haupt- und Nachpolymerisation verwendet werden, unterscheiden sich in den Zerfallstemperaturen, bezogen auf 1 Stunde Halbwertszeit, um mindestens 20°C. Setzt man Mischungen von Polymerisationsinitiatoren ein, so verwendet man 0,1 bis 5 Mol-%, bezogen auf die Monomeren des Polymerisationsinitiators mit niedrigerer Zerfallstemperatur und 0,05 bis 0,8 Mol-%, bezogen auf die Monomeren, des Polymerisationsinitiators mit höherer Zerfallstemperatur. Man erhält pulverförmige Polymerisate mit einem Teilchendurchmesser von 10 μm bis 2 cm. Der Korndurchmesser der Polymerisatteilchen beträgt vorzugsweise 0,1 bis 5 mm.

Die nach dem erfindungsgemäßen Verfahren hergestellten Polymerisate haben eine andere Molekulargewichtsverteilung als diejenigen, die beispielsweise durch Fällungspolymerisation oder durch Polymerisieren in einer Wasser-in-Öl-Emulsion erhalten werden. Verglichen mit der Fällungspolymerisation erhält man bei dem erfindungsgemäßen Verfahren eine wesentlich erhöhte Raum-Zeit-Ausbeute. Außerdem werden die üblichen Aufarbeitungsschritte zur Abtrennung und Trocknung der Polymerisate überflüssig.

Die nach dem erfindungsgemäßen Verfahren erhaltenen Polymerisate werden den für diese Stoffe bekannten Anwendungen zugeführt. So verwendet man beispielsweise Copolymerisate aus Acrylamid und Acrylsäure als Flockungsmittel in der Papierindustrie, im Bergbau und in Kläranlagen, wasserlösliche Alkali- oder Erdalkalisalze von Copolymerisaten aus Acrylnitril und Acrylsäure als Schlichtemittel, teilneutralisierte Copolymerisate aus Styrol und Maleinsäureanhydrid als Leimungsmittel für Papier, Homo- und Copolymerisate des Acrylnitrils als Verfestigungsmittel für Papier und Copolymerisate des N-Vinylpyrrolidons in der Kosmetik als Haarverfestigungsmittel.

Die in den Beispielen angegebenen Teile sind Gew.-Teile, die Angaben in Prozent beziehen sich ebenfalls auf das Gewicht der Stoffe. Die K-Werte wurden nach H. Fikentscher, Cellulosechemie 13, 58 bis 64 und 71 bis 74 (1932), bei einer Temperatur von 25° C bestimmt, dabei bedeutet $K = k \cdot 10^3$.

Beispiel 1

Herstellung eines Copolymerisates aus Styrol und Maleinsäureanhydrid

Dieses Copolymerisat wurde diskontinuierlich hergestellt.

Als Polymerisationsgefäß diente ein zylindrisches Glasgefäß von 5 l Inhalt, das mit einem Wendelrührer und einem absteigenden Kühler ausgestattet war. In das Glasgefäß mündete eine Sprühdüse, durch die die Monomerenlösung zusammen mit dem Initiator auf das vorgelegte pulverförmige Polymerisat aufgesprüht wurde. In das Glasgefäß mündete außerdem eine Stickstoffleitung, um die Polymerisation unter Stickstoffatmosphäre durchzuführen. Die Beheizung des Polymerisationsgefäßes erfolgte mit Hilfe eines Ölbades. Die Monomerenlösung wurde mit der Lösung des Polymerisationsinitiators in einem statischen Mischer gemischt. In die Leitung, durch die das Monomere zum statischen Mischer geführt wurde, war ein Wärmetauscher eingebaut, so daß die Monomerenlösung bei Bedarf gekühlt werden konnte. In der Leitung zum Kühler ist ein Abscheider eingebaut, um eventuell durch den Stickstoffstrom bzw. das verdampfende inerte organische Lösungsmittel mitgerissene Feststoffe abzuscheiden. In der oben beschriebenen Vorrichtung wurden 1500 g eines pulverförmigen Polyamids aus Adipinsäure und Hexamethylendiamin mit einem Korndurchmesser von 1 bis 2 mm vorgelegt und unter intensiver Umwälzung auf eine Temperatur von 80° C erwärmt.

Eine Lösung von 625 g Styrol und 625 g Maleinsäureanhydrid in 3750 g Methyl-tert.-butyläther wird in dem statischen Mischer mit einer Initiatorlösung aus 14,8 g Bis(4-t-butylcyclohexyl)-peroxydicarbonat in 500 ml Methyl-t-butyläther im Volumenstromverhältnis von 10 : 1 zusammengeführt und im Verlauf von 4,5 Stunden sukzessive auf das bewegte Feststoffbett aus pulverförmigem Polyamid aufgesprüht. Die Polymerisationstemperatur betrug 75° C. Während der Polymerisation wurde der Pulverzustand in der Polymerisationszone aufrechterhalten und das Lösungsmittel, Methyl-t-butyläther, durch die bei der Polymerisation freiwerdende Wärme und die dem System in Folge des Rührens des Pulverbetts zugeführte Energie kontinuierlich aus der Reaktionszone verdampft und am absteigenden Kühler kondensiert. Das vom inerten Vorlagematerial abgetrennte Copolymerisat aus Styrol und Maleinsäureanhydrid war lösungsmittelfrei und hatte einen K-Wert von 33,5% (0,2%ige Lösung in Toluol). Restmonomere waren nicht nachweisbar.

Das Copolymerisat ist in verdünnter wäßriger Natronlauge löslich und wird in teil- bzw. vollständig neutralisierter Form als Leimungsmittel für Papier verwendet.

Beispiel 2

Herstellung von Polystyrol

In der im Beispiel 1 beschriebenen Polymerisationsapparatur wurden 1500 g Polystyrol mit einem Korndurchmesser von 1 bis 2 mm vorgelegt und unter ständiger Umwälzung auf eine Temperatur von 94° C erwärmt. Dann wurde eine Lösung von 300 g Styrol in 2100 g n-Hexan mit einer Lösung eines Polymerisationsinitiators aus 13,8 g Bis-(4-t-butylcyclohexyl)-peroxydicarbonat in 500 ml n-Hexan in dem statischen Mischer im Volumenstromverhältnis von 10 : 1 zusammengeführt und im Verlauf von 6 Std. kontinuierlich auf das aus Polystyrol bestehende Feststoffbett aufgesprüht. Die Polymerisationstemperatur betrug 90° C. Während der Polymerisation wurde der Pulverzustand in der Polymerisationszone aufrechterhalten und das Lösungsmittel kontinuierlich abdestilliert. Man erhielt ein lösungsmittelfreies Polymerisat, das einen K-Wert von 60,4 (gemessen in 0,2%iger Lösung in Toluol) und einen Restmonomerengehalt von 0,45% hatte.

Das Polymerisatpulver dient zur Herstellung von Formkörpern bzw. nach dem Imprägnieren mit einem Treibmittel (z. B. Pentan) zur Herstellung von Schaumstoffformkörpern.

Beispiel 3

Herstellung von Polymethylmethacrylat

In der im Beispiel 1 angegebenen Vorrichtung wurden 1200 g Magnesiumoxid mit einem Korndurchmesser von 0,1 mm vorgelegt. Die Temperatur des Ölbades wurde auf 100° C eingestellt. Dann wurde eine Lösung von 1000 g Methylmethacrylat in 3000 g n-Hexan mit einer Lösung eines Polymerisationsinitiators aus 10,5 g Bis-(4-t-butylcyclohexyl)-peroxydicarbonat in 500 ml n-Hexan im Volumenstromverhältnis von 10 : 1 zusammengeführt und im Verlauf von 4 Stunden sukzessive auf das bewegte Feststoffbett aufgesprüht. Während der Polymerisation wurde der Pulverzustand aufrechterhalten und das Lösungsmittel kontinuierlich abdestilliert. Das vom inerten Vorlagematerial abgelöste Polymethylmethacrylat hatte einen K-Wert von 48 (gemessen in 0,2%iger Lösung in Aceton) und einen Restmonomerengehalt von 0,8%. Das Polymerisat wird zur Herstellung von Formkörpern verwendet.

### Beispiel 4

### Herstellung eines Copolymerisates aus Acrylamid und Natriumacrylat

In der im Beispiel 1 angegebenen Polymerisationsvorrichtung wurden 1500 g Polyacrylamid des K-Wertes von 53 und 616 g Natriumhydrogencarbonat vorgelegt. Die Temperatur des Ölbades wurde auf 90°C eingestellt. Über einen statischen Mischer führte man dann eine Lösung von 600 g Acrylsäue und 400 g Acrylamid gelöst in 3000 g Aceton mit einer Starterlösung, bestehend aus 16,6 g Bis-(4-t-butylcyclohexyl)-peroxydicarbonat in 500 ml Aceton im Volumenstromverhältnis von 10 : 1 zusammen und sprühte die Mischung auf das bewegte Vorlagematerial auf. Während der Polymerisation wurde der Pulverzustand aufrechterhalten und Aceton aus der Polymerisationszone abdestilliert. Die Polymerisationstemperatur betrug 75°C. Man erhielt das Natriumsalz eines Copolymerisates aus Acrylamid und Acrylsäure, das sich praktisch ohne Kohlendioxidentwicklung sehr gut in Wasser auflöste. Das Copolymerisat war praktisch frei von Aceton und hatte einen K-Wert von 52,8 (bestimmt in 5%iger NaCl-Lösung). Der Restmonomerengehalt betrug 2,4%.

Um den Restmonomerengehalt zu erniedrigen, wurde eine Nachpolymerisation durchgeführt, indem man bei einer Temperatur von 100°C eine Lösung von 5 g Benzoylperoxid in 100 g Aceton auf das bewegte Copolymerisat aufsprühte. Der Restmonomerengehalt nahm auf ca. 0,1% ab, bei leichtem Rückgang des K-Wertes auf 51,5.

Das Copolymerisat wird als Flockungsmittel in Kläranlagen verwendet.

### Beispiel 5

### Herstellung eines Copolymerisates aus Acrylamid und Ammoniumacrylat

In der im Beispiel 1 beschriebenen Vorrichtung wurden 1500 g Polyacrylamid des K-Wertes von 53 vorgelegt. Der Reaktionsraum wird mit gasförmigem Ammoniak beaufschlagt. Die Temperatur des Ölbads wird auf 90°C eingestellt. Eine Lösung aus 600 g Acrylsäure und 400 g Acrylamid in 3000 g Methyl-t-butyläther wurde dann in dem statischen Mischer mit einer Starterlösung aus 16,6 g Bis-(4-t-butylcyclohexyl)-peroxydicarbonat in 500 ml Methyl-t-butyläther mit 10% Methanol im Volumenstromverhältnis von 10 : 1 zusammengeführt und im Verlauf von 4 Stunden kontinuierlich auf das bewegte Vorlagematerial aufgesprüht. Während der Polymerisation wurde für eine gute Umwälzung des Feststoffbettes gesorgt und Ammoniak in die Polymerisationszone eingeleitet. Die Polymerisationstemperatur betrug 75°C. Der mit dem Monomeren in die Polymerisationszone eingebrachte Methyl-t-butyläther wurde während der Polymerisation kontinuierlich durch Verdampfen aus der Reaktionszone entfernt. Die Reaktionsmasse wird nach Ende der Zugabe der Monomerlösung und des Polymerisationsinitiators noch 30 min auf einer Temperatur von 90°C gehalten. Man erhält dann ein Copolymerisat aus Acrylamid und Ammoniumacrylat, das einen K-Wert von 46 hat und praktisch geruchlos ist. Der Korndurchmesser des Polymerisates beträgt 0,1 bis 2 mm. Wäßrige Lösungen des Copolymerisates werden als Flockungsmittel bei der Papierherstellung verwendet.

### Beispiel 6

### Herstellung von Polyacrylamid

In der im Beispiel 1 beschriebenen Polymerisationsapparatur werden 1500 g Polyamid des K-Wertes 53 und eines mittleren Teilchendurchmessers von 1 mm vorgelegt. Die Temperatur des Ölbades wurde auf 90°C eingestellt. Mit Hilfe des statischen Mischers wurde dann eine Lösung von 1000 g Acrylamid und 1,2 g Methylen-bis-acrylamid in 3000 g Aceton mit einer Lösung eines Polymerisationsinitiators aus 16,6 g Bis-(4-t-butylcyclohexyl)-peroxydicarbonat in 500 ml Aceton im Volumenstromverhältnis von 10 : 1 zusammengeführt und im Verlauf von 4 Stunden sukzessive auf das bewegte pulverförmige Polyacrylamid aufgesprüht. Während der Polymerisation wurde der Pulverzustand aufrechterhalten und das Aceton ständig durch Verdampfen aus der Polymerisationszone entfernt. Die Polymerisationstemperatur betrug 75°C. Man erhielt ein praktisch unverseiftes Polyacrylamid, das in Wasser vollständig löslich war und einen K-Wert von 67 hatte. Der Korndurchmesser der Polymerisates betrug 0,1 bis 2 mm. Wäßrige Lösungen des Copolymerisates werden als Verfestigungsmittel für Papier verwendet.

### Beispiel 7

### Herstellung von Polyacrylamid

Als Polymerisationsapparatur diente ein Druckkessel aus Stahl, der mit einem Wendelrührer ausgestattet war und einen Inhalt von 40 l hatte. Die Lösung der Monomeren und des Polymerisationsinitiators wurde in einer temperierbaren Sprühlanze gemischt und auf das im Druckkessel vorgelegte inerte pulverförmige Material aufgesprüht. Das bei der Polymerisation entstehende Pulver wurde mit Hilfe einer Schnecke aus der Polymerisationszone ausgetragen.

In dem Druckkessel wurden 15 kg Polyacrylamid eines K-Wertes von 53 und eines Korndurchmessers von 1 bis 4 mm vorgelegt. Die Temperatur der Schutzheizung des Druckkessels wurde auf 80°C eingestellt. Dann führte man über einen statischen Mischer 8 l/Stunde einer 25%igen Acrylamidlösung in Aceton mit 600 ml/Stunde einer Lösung von 0,18 mol-% Bis-(4-t-butylcyclohexyl)-peroxydicarbonat und 0,072 mol-% t-Butylperoctoat, bezogen auf Acrylamid, zusammen und sprühte die Mischung des Monomeren und der Polymerisationsinitiatoren während eines Zeitraums von 70 Stunden auf das Pulverbett aus Polyacrylamid. Während der Polymerisation wurde der Pulverzustand aufrechterhalten und das Aceton dampfförmig durch die Polymerisationswärme und die durch das Rühren zugeführte Energie vollständig aus dem Reaktionsraum entfernt. Das bei der Polymerisation sich bildende pulverförmige Polymerisat wurde über eine Schnecke ausgetragen. Die Polymerisationstemperatur betrug 75°C. Man erhielt 150 kg eines neugebildeten Polymerisates mit einem Korndurchmesser von 0,1 bis 5 mm und einem K-Wert von 62 (bestimmt in 0,2%iger wäßriger Lösung).

### Beispiel 8

In der im Beispiel 7 beschriebenen Polymerisationsapparatur für die kontinuierliche Polymerisation wurden 15 kg Polyacrylamid eines K-Wertes von 53 und eines Korndurchmessers von 1 bis 4 mm vorgelegt. Die Schutzheizung des Druckkessels wurde auf eine Temperatur von 80°C eingestellt. Über einen statischen Mischer führte man dann 8 l/Stunde einer 25%igen Lösung von Acrylamid in Aceton, das 5% Wasser enthielt, mit 500 ml/Stunde einer Starterlösung von 0,15 mol-% Bis-(4-t-butylcyclohexyl)-peroxidicarbonat, 0,06 mol-% t-Butylperoctoat und 0,024 mol-% Dibenzoylperoxid, jeweils bezogen auf Acrylamid, zusammen und sprühte die Mischung innerhalb eines Zeitraums von 70 Stunden auf das pulverförmige Feststoffbett auf. Während der Polymerisation wurde das Feststoffbett ständig umgewälzt, das Lösungsmittel sowie das mit dem Lösungsmittel in die Polymerisationszone eingebrachte Wasser kontinuierlich verdampft und dadurch der Pulverzustand während der Polymerisation aufrechterhalten. Die Polymerisationstemperatur betrug 75°C. Man erhielt 150 kg eines neugebildeten Polyacrylamids, das lösungsmittelfrei war und einen K-Wert von 87 hatte (bestimmt in 0,2%iger wäßriger Lösung), bei einem Restmonomerengehalt von 0,9%.

20 kg dieses Polyacrylamids wurden einer Nachpolymerisation unterworfen, indem es über 4 Stunden einer Temperatur von 110°C ausgesetzt wurde, wodurch der Zerfall der im Produkt enthaltenen Polymerisationsinitiatoren (t-Butylperoctoat und Dibenzoylperoxid) ausgelöst wurde. Der Restmonomerengehalt sank auf Werte um 0,1% bei K-Werten von 86.

### Beispiel 9

Herstellung eines Copolymerisates aus 80% Acrylamid und 20% Acrylsäure

In der im Beispiel 7 angegebenen Polymerisationsvorrichtung wurden 15 kg Polyacrylamid eines K-Wertes von 53 und eines mittleren Korndurchmessers von 1 bis 4 mm vorgelegt. Die Temperatur der Schutzheizung des Kessels wurde auf 80°C eingestellt. Dann führte man mit Hilfe eines statischen Mischers 8 l/Stunde einer 25%igen Lösung von 80% Acrylamid und 20% Acrylsäure in Aceton mit 700 ml/Stunde einer Starterlösung aus 0,21 mol-% Bis-(4-t-butylcyclohexyl)-peroxydicarbonat und 0,084 mol-% t-Butylperoctoat, bezogen auf die Monomerenmischung, zusammen und sprühte die Mischung während 63 Stunden auf das Feststoffbett unter Aufrechterhaltung des Pulverzustandes auf. Die Polymerisationstemperatur betrug 75°C. Das Aceton wurde kontinuierlich aus der Polymerisationszone verdampft. Man erhielt 135 kg eines neugebildeten praktisch lösungsmittelfreien Copolymerisates, das einen K-Wert von 80 (bestimmt in 5%iger NaCl-Lösung) und einen Korndurchmesser von 1 bis 5 mm hatte.

### Beispiel 10

Herstellung von Polyvinylpyrrolidon

In der im Beispiel 1 beschriebenen Polymerisationsapparatur wurden 1500 g eines trockenen pulverförmigen Polyvinylpyrrolidons mit einem Korndurchmesser von 1 bis 2 mm vorgelegt. Die Temperatur des Ölbades wurde auf 90°C eingestellt. Dann führte man eine 30%ige Lösung von N-Vinylpyrrolidon in Cyclohexan mit einer Starterlösung aus Azoisobutyronitril, 5%ig in Cyclohexan, im Volumenstromverhältnis von 10 : 1 in einem statischen Mischer zusammen und sprühte das Gemisch aus Monomeren und Polymerisationsinitiator kontinuierlich innerhalb eines Zeitraums von 5 Stunden auf das ständig bewegte Feststoffbett auf. Die Polymerisationstemperatur betrug 85°C. Während der Polymerisation wurde das Cyclohexan kontinuierlich bei schwachem Vakuum aus der Polymerisationszone entfernt. Man erhielt pulverförmiges Polyvinylpyrrolidon, das einen K-Wert von 60 (in 5%iger NaCl-Lösung bestimmt) und einen Korndurchmesser von 0,1 bis 4 mm hatte. Das pulverförmige Polymerisat war klar wasserlöslich.

### Beispiel 11

#### Herstellung eines Copolymerisates aus N-Vinylpyrrolidon und Vinylacetat

In der im Beispiel 1 angegebenen Polymerisationsapparatur wurden 1500 g eines pulverförmigen Polyvinylpyrrolidons mit einem Korndurchmesser von 1 bis 2 mm vorgelegt. Die Temperatur des Ölbades wurde auf 90° C eingestellt. Auf das ständig bewegte Festbett wurde über einen statischen Mischer eine 30%ige Lösung von 80% N-Vinylpyrrolidon und 20% Vinylacetat in Hexan mit einer Starterlösung aus Azoisobutyronitril, 5%ig in Hexan, im Volumenstromverhältnis von 10 : 1 zusammengeführt und innerhalb eines Zeitraums von 5 Stunden sukzessive auf das bewegte Feststoffbett aufgesprüht. Während der Polymerisation wurde der Pulverzustand aufrechterhalten und das Hexan kontinuierlich aus der Polymerisationszone verdampft. Die Polymerisationstemperatur betrug 70° C. Man erhielt ein pulverförmiges Copolymerisat, das einen K-Wert von 70 (bestimmt in 5%iger NaCl-Lösung) und einen Korndurchmesser von 0,1 bis 4 mm hatte. Wäßrige Lösungen des Copolymerisates werden als Haarverfestiger verwendet.

### Beispiel 12

#### Herstellung eines Copolymerisates aus Styrol und Acrylsäure

In der in Beispiel 1 beschriebenen Apparatur zur diskontinuierlichen Herstellung von Polymerisatpulvern wurden 1500 g Polyamidgranulat mit einem Korndurchmesser von 1 bis 2 mm vorgelegt. Die Temperatur des Ölbades wurde auf 90° C eingestellt. Über einen statischen Mischer führte man dann eine Lösung von 600 g Styrol und 200 g Acrylsäure in 2,5 l Cyclohexan mit einer Starterlösung aus 20 g Lauroylperoxid in 250 ml Cyclohexan im Volumenstromverhältnis von 10 : 1 zusammen und sprühte die Mischung innerhalb von 4 Stunden auf das bewegte Feststoffbett auf. Während der Polymerisation wurde der Pulverzustand in der Polymerisationszone aufrechterhalten und das Lösungsmittel durch Verdampfen aus der Polymerisationszone entfernt. Die Polymerisationstemperatur betrug 85° C. Man erhielt ein Copolymerisat, das einen K-Wert von 50 und eine Säurezahl von 350 hatte. Der Korndurchmesser des Copolymerisates betrug 0,5 bis 3 mm. Das Copolymerisat kann als Bindemittel für Straßenmarkierungsverfahren und als Beschichtungsmittel für Metalle verwendet werden.

### Beispiel 13

#### Herstellung von Polyacrylsäure

In der im Beispiel 1 angegebenen Vorrichtung wurden 1500 g Polyamidgranulat mit einem Korndurchmesser von 1 bis 2 mm vorgelegt und die Temperatur des Ölbades auf 90° C eingestellt. Über einen statischen Mischer führte man dann eine Lösung von 1200 g Acrylsäure in 4 l Cyclohexan mit einer Starterlösung aus 10 g t-Butylperpivalat in 400 ml Cyclohexan im Volumenstromverhältnis von 10 : 1 zusammen und sprühte innerhalb von 5 Stunden die Mischung aus Acrylsäure und Polymerisationsinitiator in Cyclohexan auf das unter ständiger Umwälzung befindliche Feststoffbett auf. Die Polymerisationstemperatur betrug 90° C. Während der Polymerisation wurde das Lösungsmittel kontinuierlich aus der Polymerisationszone verdampft. Man erhielt Polyacrylsäure mit einem K-Wert von 105 (bestimmt in 5%iger NaCl-Lösung) und einem Korndurchmesser von 0,5 bis 3 mm. Das Polymerisat kann als Verdickungsmittel in Druckpasten verwendet werden.

### Beispiel 14

#### Herstellung von Polyammoniumacrylat

In der im Beispiel 1 angegebenen Vorrichtung wurden 1500 g Polyamid mit einem Korndurchmesser von 1 bis 2 mm vorgelegt und die Temperatur des Ölbades auf 75° C eingestellt. Über einen statischen Mischer führte man dann eine Lösung von 1000 g Acrylsäure in 3000 g Methyl-t-butyläther mit einer Starterlösung aus 16,6 g Bis(4-t-butylcyclohexyl)-peroxidicarbonat in 500 ml Methyl-t-butyläther im Volumenstromverhältnis von 10 : 1 zusammen und sprühte innerhalb von 5 Stunden die Mischung aus Acrylsäure und Polymerisationsinitiator in Methyl-t-butyläther auf das in ständiger Umwälzung befindliche Feststoffbett auf. Die Polymerisationstemperatur betrug 75° C. Im Reaktor herrschte eine Ammoniakatmosphäre. Während der Polymerisation wurde der Pulverzustand aufrechterhalten und der Methyl-t-butyläther dampfförmig durch die Polymerisationswärme, die Neutralisatonswärme und die durch das Rühren zugeführte Energie vollständig aus dem Reaktionsraum entfernt. Man erhielt Polyammoniumacrylat mit einem K-Wert von 127,3 (0,1%ige Lösung von Polyammoniumacrylat in 5%iger NaCl-Lösung) und einem Korndurchmesser von 0,1 bis 2 mm.

**Patentansprüche**

1. Verfahren zur Herstellung von pulverförmigen Polymerisaten aus polymerisierbaren monoäthylenisch ungesättigten Verbindungen, deren Siedepunkt bei 1013 mbar oberhalb von +5°C liegt, durch Polymerisieren der Monomeren in einem Pulverbett in Gegenwart üblicher Polymerisationsinitiatoren unter Aufrechterhaltung des Pulverzustandes und Umwälzung der Reaktionsmasse, dadurch gekennzeichnet, daß man die Monomeren gelöst oder emulgiert in einem inerten organischen Lösungsmittel, das ein Fällungsmittel für die Polymerisate ist, in Form 5- bis 50%iger Lösungen oder Emulsionen unter Polymerisationsbedingungen mit dem Pulverbett in Kontakt bringt und die organischen Lösungsmittel während der Polymerisation dampfförmig aus der Polymerisationszone entfernt.

2. Verfahren nach Anspruch 1, dadurch gekennzeichnet, daß man als Monomere wasserlösliche, äthylenisch ungesättigte Verbindungen, die hydrophile Polymerisate bilden, einsetzt.

3. Verfahren nach Anspruch 1, dadurch gekennzeichnet, daß man als Monomere wasserunlösliche Monomere einsetzt.

4. Verfahren nach den Ansprüchen 1 bis 3, dadurch gekennzeichnet, daß man Mischungen von Polymerisationsinitiatoren verwendet, die sich in den Zerfallstemperaturen, bezogen auf 1 Stunde Halbwertszeit um mindestens 20°C unterscheiden, wobei die Mischung 0,1 bis 5 Mol-%, bezogen auf die Monomeren, des Polymerisationsinitiators mit niedrigerer Zerfallstemperatur und 0,05 bis 0,8 Mol-%, bezogen auf die Monomeren des Polymerisationsinitiators mit höherer Zerfallstemperatur enthält.

5. Verfahren nach den Ansprüchen 1 bis 4, dadurch gekennzeichnet, daß man im Anschluß an die Hauptpolymerisation einen Polymerisationsinitiator zusetzt, der bei höherer Temperatur zerfällt als der für die Hauptpolymerisation verwendete und die Nachpolymerisation bei einer um 10 bis 100°C höheren Temperatur als die Hauptpolymerisation durchführt.

## Claims

1. A process for the preparation of a polymer powder from polymerizable monoethylenically unsaturated compounds which boil at above +5°C under 1,013 mbar, by polymerizing the monomers in a powder bed in the presence of a conventional polymerization initiator, whilst maintaining the reaction mixture in the form of a powder and causing it to circulate, wherein the monomers, in the form of solutions or emulsions, of from 5 to 50% strength, in an inert organic solvent which is a precipitant for the polymer, are brought into contact with the powder bed under polymerization conditions, and the organic solvent is removed from the polymerization zone in vapor form during the polymerization.

2. A process as claimed in claim 1, wherein the monomers employed are water-soluble, ethylenically unsaturated compounds which form hydrophilic polymers.

3. A process as claimed in claim 1, wherein the monomers employed are water-insoluble.

4. A process as claimed in claims 1 to 3, wherein a mixture of polymerization initiators, which differ by at least 20°C in the temperature at which their decomposition has a half-life of 1 hour, is employed, the mixture containing from 0.1 to 5 mole %, based on monomers, of the polymerization initiator having the lower decomposition temperature and from 0.05 to 0.8 mole %, based on monomers, of the polymerization initiator having the higher decomposition temperature.

5. A process as claimed in claims 1 to 4, wherein, following the main polymerization, a polymerization initiator which decomposes at a higher temperature than does the initiator used for the main polymerization is added, and the final polymerization is carried out at from 10 to 100°C above the temperature at which the main polymerization has been carried out.

## Revendications

1. Procédé de préparation de polymérisats en poudre à partir de composés polymérisables, à insaturation monoéthylénique, dont le point d'ébullition est supérieur à +5°C sous 1013 mbars, par polymérisation des monomères dans un lit de poudre, en présence des initiateurs de polymérisation usuels, en maintenant l'état de poudre et en faisant circuler la masse de réaction, caractérisé par le fait qu'on met en contact avec le lit de poudre, sous forme de solutions ou émulsions à 5 à 50%, dans des conditions de polymérisation, les monomères dissous ou émulsifiés dans un solvant organique inerte qui est un précipitant pour les polymérisats, et on élimine le solvant organique de la zone de polymérisation sous forme de vapeur, pendant la polymérisation.

2. Procédé selon la revendication 1, caractérisé par le fait que l'on introduit comme monomères des composés à insaturation éthyléniques, solubles dans l'eau et qui forment des polymérisats hydrophiles.

3. Procédé selon la revendication 1, caractérisé par le fait qu'on introduit, comme monomères, des monomères insolubles dans l'eau.

4. Procédé selon les revendications 1 à 3, caractérisé par le fait qu'on utilise des mélanges d'initiateurs de polymérisation qui diffèrent les uns des autres d'au moins 20°C, en températures de désintégration, rapportées à 1 heure de période, le mélange contenant 0,1 à 5% (moles), rapportés aux monomères, de l'initiateur de polymérisation à température de désintégration la plus faible et 0,05 à 0,8% (moles), rapportés aux monomères, de l'initiateur de polymérisation à température de désintégration la plus élevée.

5. Procédé selon les revendications 1 à 4, caractérisé par le fait que, à la suite de la polymérisation principale, on ajoute un initiateur

**0 027 936**

de polymérisation qui se désintègre à température plus élevée que celui utilisé pour la polymérisation principale et on effectue la post-polymérisation à une température supérieure de 10 à 100°C à celle de la polymérisation principale.